# EUROPEAN PATENT APPLICATION

(11) **EP 2 684 901 A1**
(43) Date of publication of application: **15.01.2014**
(21) Application number: 11860762.1
(22) Date of filing: 29.03.2011
(51) Int. Cl.: C08F 120/22, C09D 7/06

(54) **FLUOROCARBON ANTI-CRATERING LEVELLING AGENT FOR COATINT AND INK**

(30) Priority: 11.03.2011 CN 201110058889
(71) Applicant: Chen, Yongkang, Chizhou, Anhui 247200 (CN)
(72) Inventor: Chen, Yongkang, Chizhou, Anhui 247200 (CN)
(74) Representative: Gulde Hengelhaupt Ziebig & Schneider
(86) International application number: PCT/CN2011/072271
(87) International publication number: WO 2012/122722

(57) **Abstract**

A fluorocarbon leveling agent (fluoride-containing surfactant) for coating and ink has the surface tension of the leveling agent of 21-24 dynes, the number-average molecular weight of 1500-4500, the weight-average molecular weight of 3000-15000, and the polydispersity of 1.5-2.8. The present invention can reduce the surface tension of the coating system and has strong anti-shrinkage capability and excellent long wave leveling.

## Description

### Field of Invention

The present invention relates to a fluorocarbon anti-shrinkage leveling agent (fluoride-containing surfactant) for coating and ink and a manufacturing method thereof, which belongs to the coating additives technology.

### Description of Related Arts

Currently, the non-silicon leveling agent and the fluorine-containing leveling agent used in the solvent-based industrial coatings have the shortcoming of poor anti-shrinkage capability. However, the silicone leveling agent with excellent anti-shrinkage capability can not resist high temperature and has poor recoatability.

### Summary of the Present Invention

An object of the present invention is to provide a fluorocarbon anti-shrinkage leveling agent (fluoride-containing surfactant) for coating and ink, which is capable of reducing the surface tension of the coating system and has strong anti-shrinkage capability.

The technical solution of the present invention is described as follows.

A fluorocarbon anti-shrinkage leveling agent (also known as fluoride-containing surfactant) for coating and ink, is characterized in that: a surface tension thereof is 21-24 dynes, a number-average molecular weight thereof is 1500-4500, a weight-average molecular weight thereof is 3000-15000, and a polydispersity thereof is 1.5-2.8.

The fluorocarbon anti-shrinkage leveling agent (also known as fluoride-containing surfactant) for coating and ink is made of raw materials with weight percentage as below:

| | |
|---|---|
| solvent | 5-90%; |
| fluorinated acrylate monomer | 5-90%; and |
| initiator | 0.1-10%, |

wherein, the solvent is xylene, butyl acetate, propylene glycol methyl ether or propylene glycol monomethyl ether acetate; the fluorinated acrylate monomer is trifluoroethyl acrylate, methyl acrylate, trifluoroethyl methacrylate, methacrylate butyl hexafluorophosphate, fluoro-heptyl acrylate dodecyl ester, or dodecafluoroheptyl methacrylate ester; and the initiator is azobisisobutyronitrile, benzoyl peroxide, tert-amyl acetate peroxide (TAPA), or di-tert-amyl peroxide (DTAP).

The preparation method of the fluorocarbon anti-shrinkage leveling agent (also known as fluoride-containing surfactant) for coating and ink is described as follows. Add 30-40% weight account of butyl acetate into a four-necked flask with a reflux condenser, a thermometer, an agitator, and a dropping funnel, and then stir by starting the agitator. When the temperature reaches 118°C, after the reflux of the butyl acetate solvent in the reflux condenser, begin to add 30-40% weight account of butyl acetate, trifluoroethyl acrylate, and 70-90% weight account of azobisisobutyronitrile in drops. Finish the dropping after 3 hours, and then continue to stir for 2 hours at the maintaining temperature of 118°C, and then add the mixture of the residual butyl acetate and the residual azobisisobutyronitrile in drops for 10 minutes, and then continue to stir for 2 hours at the maintaining temperature of 118°C. After finishing maintaining the temperature, the solvent is distilled off by reducing the pressure, or the solid content is adjusted to be 50% for removing the product.

The product of the present invention has excellent working principle and simple production method.

### Brief Description of the Drawings

Fig. 1 is a schematic diagram of the surface tension value of the fluoride-containing surfactant for solvent-based coatings of the present invention, the fluorine-containing acrylate leveling agent, the pure acrylate leveling agent and the acrylic varnish stock solution.
Fig. 2 is a comparison diagram of the surface tension value of the pure acrylate leveling agent, the fluorine-containing acrylate leveling agent and the fluorocarbon anti-shrinkage leveling agent for coating and ink of the present invention in the acrylic varnish.

### Detailed Description of the Preferred Embodiment

The present invention is further detailedly explained with the accompanying drawings and preferred embodiment.

### Embodiment 1:

Add 50g butyl acetate into a four-necked flask with a reflux condenser, a thermometer, an agitator, and a dropping funnel, and stir by starting the agitator. When the temperature reaches 118°C, after the reflux of the butyl acetate solvent in the reflux condenser, begin to add 15g butyl acetate, 210g butyl acrylate trifluoroacetic, and 5.74g azobisisobutyronitrile in drops. Finish the dropping after 3 hours, and then continue to stir for 2 hours at the maintaining temperature of 118°C, and then add the mixture of 5g butyl acetate and 1.19g azobisisobutyronitrile in drops for 10 minutes, and then continue to stir for 2 hours at the maintaining temperature of 118°C. After finishing maintaining the temperature, the solvent is distilled off by reducing the pressure, or the solid content is adjusted to be 50% for removing the product, and then the product is sealed and packaged.
1. Product performance is as follows. The appearance of the product is a pale yellow transparent liquid, the solid content thereof is 50% or 100%, the surface tension thereof is 21-24 dynes, the number-average molecular weight thereof is 1500-4500, the weight-average molecular weight thereof is 3000-15000, and the polydispersity thereof is 1.5-2.8.

When the surface tension is 21-24 dynes, the leveling agent can effectively reduce the surface tension of the coating system. When the number-average molecular weight, the weight-average molecular weight and the polydispersity are in the range mentioned above, the long wave leveling of the paint is excellent.

### Embodiment 2:

The amount of every component is as below:

| | |
|---|---|
| solvent | 5-90% (such as 5%, 50% and 90%); |
| fluorinated acrylate monomer | 5-90% (such as 90%, 50% and 5%); and |
| initiator | 0.1-10% (such as 10%, 5% and 0.1%), |

wherein, the solvent is xylene, butyl acetate, propylene glycol methyl ether or propylene glycol monomethyl ether acetate; the fluorinated acrylate monomer is trifluoroethyl acrylate, methyl acrylate, trifluoroethyl methacrylate, methacrylate butyl hexafluorophosphate, fluoro-heptyl acrylate dodecyl ester, or dodecafluoroheptyl methacrylate ester; and the initiator is azobisisobutyronitrile, benzoyl peroxide, tert-amyl acetate peroxide (TAPA), or di-tert-amyl peroxide (DTAP).

The step-by-step percentage of use of the same component mentioned above is the same as that in Embodiment 1. The others are the same as those in Embodiment 1.
2. The surface tension of the obtained leveling agent is 21-24 dynes, the number-average molecular weight thereof is 1500-4500, the weight-average molecular weight thereof is 3000-15000, and the polydispersity thereof is 1.5-2.8.

### Illustrate:

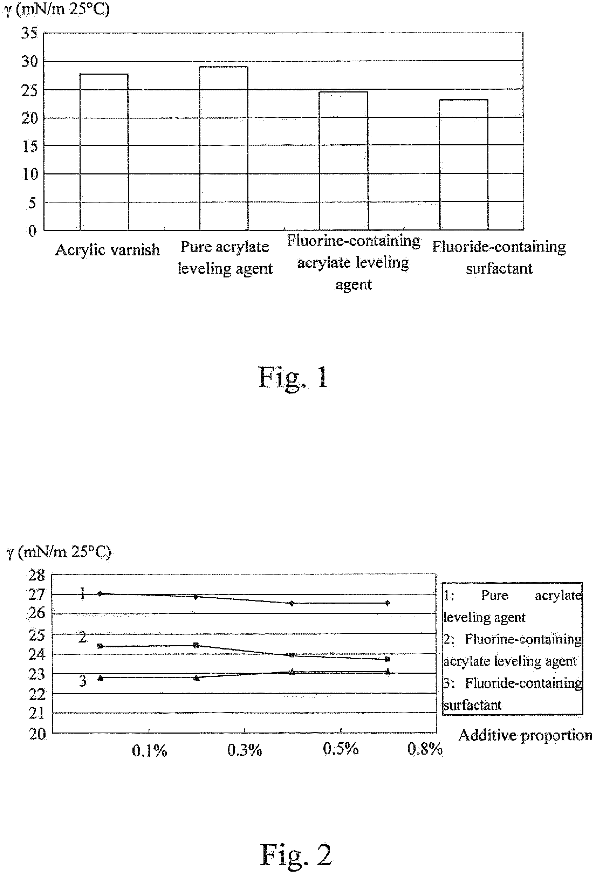

The surface tension values of the fluoride-containing surfactant for solvent-based coatings, the fluorine-containing acrylate leveling agent, the pure acrylate leveling agent and the acrylic varnish stock solution are shown in Fig. 1.

If add 0.1%, 0.3%, 0.5% and 0.8% fluorine-containing leveling agent and the pure acrylate leveling agent into the acrylic varnish, respectively, the surface tension of the acrylic varnish decreases, which is shown in Fig. 2.

The above-mentioned description explains that when the surface tension value of the fluoride-containing surfactant is 22.992 dynes, the fluoride-containing surfactant can reduce the surface tension of the coating system more than the lyacrylate leveling agent and the fluorine-containing leveling agent. Furthermore, due to the decrease of the surface tension value of the varnish, the varnish has excellent anti-shrinkage capability, the substrate wettability and the leveling speed.

## Claims

1. A fluorocarbon anti-shrinkage leveling agent for coating and ink, **characterized in that** a surface tension thereof is 21-24 dynes, a number-average molecular weight thereof is 1500-4500, a weight-average molecular weight thereof is 3000-15000, and a polydispersity thereof is 1.5-2.8.

2. The fluorocarbon anti-shrinkage leveling agent for coating and ink, as recited in claim 1, **characterized in that** the fluorocarbon anti-shrinkage leveling agent is made of raw materials with weight percentage as below:
| | |
|---|---|
| solvent | 5-90%; |
| fluorinated acrylate monomer | 5-90%; and |
| initiator | 0.1-10%, |
wherein, the solvent is xylene, butyl acetate, propylene glycol methyl ether or propylene glycol monomethyl ether acetate; the fluorinated acrylate monomer is trifluoroethyl acrylate, methyl acrylate, trifluoroethyl methacrylate, methacrylate butyl hexafluorophosphate, fluoro-heptyl acrylate dodecyl ester, or dodecafluoroheptyl methacrylate ester; and the initiator is azobisisobutyronitrile, benzoyl peroxide, tert-amyl acetate peroxide, or di-tert-amyl peroxide,
wherein a preparation method of the fluorocarbon anti-shrinkage leveling agent is described as follows: add 30-40% weight account of butyl acetate into a four-necked flask with a reflux condenser, a thermometer, an agitator, and a dropping funnel, and then stir by starting the agitator; when a temperature reaches 118°C, after a reflux of the butyl acetate solvent in the reflux condenser, begin to add 30-40% weight account of butyl acetate, trifluoroethyl acrylate, and 70-90% weight account of azobisisobutyronitrile in drops; finish the dropping after 3 hours, and then continue to stir for 2 hours at the maintaining temperature of 118°C, and then add a mixture of the residual butyl acetate and the residual azobisisobutyronitrile in drops for 10 minutes, and then continue to stir for 2 hours at the maintaining temperature of 118°C; after finishing maintaining the temperature, the solvent is distilled off by reducing a pressure, or a solid content is adjusted to be 50% for removing a product.
